# EUROPÄISCHE PATENTANMELDUNG

(11) **EP 4 008 497 A1**
(43) Veröffentlichungstag der Anmeldung: **08.06.2022**
(21) Anmeldenummer: 20211995.4
(22) Anmeldetag: 04.12.2020
(51) Int. Cl.: B25J 9/16

(54) **VALIDIEREN EINER POSE EINES ROBOTERS**

(71) Anmelder: SICK AG, 79183 Waldkirch (DE)
(72) Erfinder: HOFMANN, Dr. Christoph, 79108 Freiburg (DE); STEINKEMPER, Dr. Heiko, 79100 Freiburg (DE); UHL, Fabian, 77978 Schuttertal (DE)

(57) **Zusammenfassung**

Es wird ein Verfahren zum Validieren einer Pose mit einer Position und/oder einer Orientierung eines ersten Gliedes (16) eines mehrgliedrigen Roboters (10) mit jeweils einem Gelenk (12) zwischen den Gliedern angegeben, bei dem die Pose zumindest teilweise durch eine Robotersteuerung (14) des Roboters (10) und eine weitere Kinematikinformation der Pose aus Sensorinformationen eines mit dem Roboter (10) mitbewegten Sensors (18) bestimmt und die von der Robotersteuerung (14) bestimmte Pose anhand der Kinematikinformation validiert wird. Dabei werden mehrere Inertialsensoren (18) an jeweils einem Glied mitbewegt, die als Kinematikinformation eine Orientierungsänderung oder Orientierung des jeweiligen Gliedes bestimmen.

## Beschreibung

Die Erfindung betrifft ein Verfahren und eine sichere Posenbestimmungsvorrichtung zum Validieren einer Pose mit einer Position und/oder einer Orientierung eines ersten Gliedes eines mehrgliedrigen Roboters mit jeweils einem Gelenk zwischen den Gliedern nach dem Oberbegriff von Anspruch 1 beziehungsweise 14.

Voraussetzung für eine enge Zusammenarbeit von Robotern mit Personen (MRK, Mensch-Roboter-Kollaboration) ist die verlässliche Vermeidung von Unfällen. Dazu wird der Roboter mit Hilfe von Sensoren überwacht, und wenn demnach eine Gefährdung einer Person droht, wird eine geeignete Absicherungsmaßnahme ergriffen. Derart in der Sicherheitstechnik eingesetzte Sensoren müssen besonders zuverlässig arbeiten und deshalb hohen Sicherheitsanforderungen gerecht werden, beispielsweise aus der Norm EN13849 für Maschinensicherheit und der Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile. Weitere relevante Normen in diesem Zusammenhang sind beispielsweise die ISO 10218 für Industrieroboter oder die ISO 15066 für kollaborierende Roboter.

Eine Grundvoraussetzung für solche Sicherheitsanwendungen ist die sichere Kenntnis der aktuellen Roboterpose. Dabei bezeichnet Pose die Position und die Orientierung in bis zu sechs Freiheitsgraden. Häufig bezieht sich das auf eine Armspitze oder anschaulich eine Hand (Endeffektor oder TCP, Tool Center Point) eines Roboterarms. Der zeitliche Verlauf der Pose gibt vollständige Information über die Kinematik, so dass eine angemessene Absicherung möglich wird. Sichere Kenntnis wiederum bedeutet, dass die Pose unter den strengen Anforderungen einschlägiger Sicherheitsnormen verlässlich erfasst ist, von denen oben einige genannt sind.

Für seine Bewegungsplanung kennt ein Roboter üblicherweise seine eigene Pose und misst dafür beispielsweise mit Drehgebern die Winkelstellung an seinen Gelenken. Diese Information ist aber in aller Regel nicht sicher, und wenn sie es ist, so gelingt dies nur mit sehr kostspieligen Maßnahmen wie einer redundanten Auslegung der Drehgeber. Validieren der Pose heißt nun, ursprünglich unsichere Informationen zu sicheren Informationen im Sinne der funktionalen Sicherheit aufzuwerten.

Einige heutige Industrieroboter verfügen über eine sogenannte virtuelle Koordinatenbegrenzung, die mit einem bestimmten Sicherheitsniveau garantiert, dass der dadurch eingefasste Arbeitsbereich nicht verlassen wird. Die aktuelle Roboterpose innerhalb der Koordinatenbegrenzung jedoch ist zu keinem Zeitpunkt sicher zugänglich. Somit ist nicht mehr erreicht, als dass der Roboter in der meist sehr großvolumigen Zone innerhalb der virtuellen Koordinatenbegrenzungen bleibt. Eine enge Mensch-Roboter-Kooperation wird dadurch noch keineswegs möglich. Trotzdem ist selbst dieses eingeschränkte Sicherheitsmerkmal noch wenig verbreitet und teuer.

Eine weitere Sicherheitsfunktion für einen Roboter nach dem Stand der Technik ist die Bereitstellung einer sicheren Ausgangsposition (safe home position). Das garantiert aber lediglich das Erreichen beziehungsweise Beibehalten einer einzigen sicheren Position, womit sich keine dynamische Mensch-Maschine-Kollaboration umsetzen lässt.

Die DE 10 2015 112 656 A1 stellt eine Absicherungslösung vor, bei der ein Distanzsensor beziehungsweise eine Mehrfachanordnung von Distanzsensoren nach dem Prinzip der Lichtlaufzeitmessung mit dem Werkzeug am Roboterarm mitbewegt wird. Damit wird eine Art virtuelle Schutzglocke um das Werkzeug überwacht und der Roboter bei Eindringen eines sicherheitsrelevanten Objekts gebremst oder angehalten. Dies ist soweit unabhängig von der jeweils aktuellen Pose des Roboters, indem die virtuelle Schutzglocke für den ungünstigsten Fall ausgelegt wird. Die DE 10 2019 110 882 A1 erweitert den Ansatz um eine Anpassung von Abstandsschwellen und damit der Ausdehnung der virtuellen Schutzglocke während einer Annäherungsbewegung an eine Arbeitsoberfläche oder ein Werkstück. In der EP 3 744 482 A1 wird auch die Ausrichtung der schützenden Strahlen mindestens eines Distanzsensors und damit die Form, insbesondere Öffnungswinkel und/oder Durchmesser der Schutzglocke verändert. Hierfür wären sichere Informationen über die aktuelle Pose sehr hilfreich für eine angemessene Anpassung der virtuellen Schutzglocke, aber für diesen Aspekt bieten diese Dokumente keine neuen Ansätze.

Der Stand der Technik bietet weiterhin sehr leistungsfähige Inertialsensoren (IMU, Inertial Measurement Unit), die oft mehrere Einzelsensoren miteinander kombinieren und damit Messinformation über Drehrate und Beschleunigung liefern. Sie bieten fortgeschrittene Funktionen für Sensorfunktion und Korrektur der Grundausrichtung sowie eine Kombination mehrerer IMUs. Derartige Inertialsensoren sind aber weder allein sicher, noch werden sie bisher an Robotern in Sicherheitsanwendungen zur Vermeidung von Unfällen eingesetzt. Eine Beispielanwendung ist die Navigation im Innenbereich, wie beispielsweise in der Arbeit Poulose, Alwin, Odongo Steven Eyobu, and Dong Seog Han. "An indoor position-estimation algorithm using smartphone IMU sensor data." IEEE Access 7 (2019): 11165-11177.

Gui, Pengfei, Liqiong Tang, and Subhas Mukhopadhyay. "MEMS based IMU for tilting measurement: Comparison of complementary and Kalman filter based data fusion." 2015 IEEE 10th conference on Industrial Electronics and Applications (ICIEA), IEEE, 2015, befasst sich mit einer verbesserten Orientierungsmessung einer IMU unter Verwendung eines Kalman-Filters. Außer einem allgemeinen Verweis auf die Anwendbarkeit in der Robotik hat das aber keinen weiteren Zusammenhang mit der Validierung einer Roboterpose.

In der Arbeit von Chen, Xiaohan, et al. "Pose estimation of robotic end-effectors under low speed motion using EKF with inertial and SE (3) measurements." 2015 IEEE International Conference on Advanced Intelligent Mechatronics (AIM), IEEE, 2015, wird die Orientierung des Endeffektors des Roboters mit einer IMU bestimmt und dies über einen Kalman-Filter mit einer Posenbestimmung fusioniert. Die Posenbestimmung fußt auf einem visuellen System. Der Kalman-Filter führt zwar bei diesem Vorgehen in vielen Situationen zu einer besseren Schätzung, gewährleistet aber keineswegs funktionale Sicherheit.

In der DE 10 2019 111 642 B3 wird ein Laserscanner zum Absichern der Umgebung eines Fahrzeugs eingesetzt. Die Geschwindigkeit des Fahrzeugs wird von Drehgebern an den Rädern gemessen, und dies wird mit Bewegungsinformation einer in den Laserscanner integrierten Inertialmesseinheit verglichen. Die Komplexität der Bewegung eines Fahrzeugs ist aber in keiner Weise vergleichbar mit den wechselnden Posen eines Roboters, und nicht einmal die Kinematik des gegenüber dem Roboter viel einfacheren Fahrzeugs ist über dessen Geschwindigkeit auch nur annähernd vollständig beschrieben. Für die Absicherung eines Roboterarms wäre ein Laserscanner zudem weder von seiner Baugröße noch seinem Messprinzip besonders geeignet.

Aus der DE 10 2017 111 885 B4 ist ein Verfahren zum Überwachen einer Maschine bekannt, an der eine Kamera angebracht ist, um während der Bewegung aus der Ego-Perspektive Bilder aufzunehmen und daraus die Eigenposition zu bestimmen. Das wird dazu verwendet, Stoppzeit und Nachlaufweg der Maschine nach einer Absicherung auf sichere Weise zu bestimmen oder zu validieren. Um die kinetischen Größen zusätzlich diversitär zu prüfen oder zu verbessern, können mehrere Kameras oder zusätzliche Sensoren wie Drehgeber oder Trägheitssensoren verwendet werden. Die Validierung in der Nachlaufphase ist jedoch nur ein vorbereitender Schritt, in dem die von den späteren eigentlichen Arbeitsschritten unbeeinträchtigte Sicht der Kamera gewährleistet und beispielsweise vorübergehend eine sperrige Kamera am Roboter angebracht werden kann.

Die EP 3 650 740 A1 bestimmt die Pose eines beweglichen Maschinenteils mit Hilfe mehrerer Positionssensoren und zugleich die Eigenposition einer an dem beweglichen Maschinenteil angebrachten Kamera mit einem Verfahren entsprechend der DE 10 2017 111 885 B4. Die somit zweifach bestimmten Bewegungsbahnen werden miteinander verglichen.

Die DE 10 2018 118 265 A1 beschreibt ein Verfahren zum Absichern einer Maschine mit einer Kamera, bei dem mit Hilfe der Kamera in einer Einlernphase eine Referenzkarte der Umgebung erzeugt wird, an der sich die Kamera in der anschließenden Betriebsphase orientiert. Folglich ist auch hier die Grundlage ein optisches Verfahren, das durch mehrere Kameras oder andere Sensoren einschließlich Drehgebern oder Trägheitssensoren zur diversitären Prüfung oder Verbesserung der kinetischen Größen verbessert werden kann.

Die WO 2020/200386 A1 befasst sich mit einem erweiterbaren Sicherheitssystem für einen Roboter. Dabei wird geprüft, ob ein benutzerdefinierter Sicherheitsparameter in einem vorgegebenen Bereich bleibt und andernfalls eine Sicherheitsmaßnahme eingeleitet. Dabei geht es jedoch um die Bereitstellung einer allgemeinen Schnittstelle für Sicherheitsparameter und nicht konkret um die Pose.

Es ist daher Aufgabe der Erfindung, eine verlässliche Alternative zum Bestimmen einer Pose eines Roboters anzugeben.

Diese Aufgabe wird durch ein Verfahren und eine sichere Posenbestimmungsvorrichtung zum Validieren einer Pose mit einer Position und/oder einer Orientierung eines ersten Gliedes eines mehrgliedrigen Roboters oder Roboterarms mit jeweils einem Gelenk zwischen den Gliedern nach Anspruch 1 beziehungsweise 14 gelöst. Weiterhin bedeutet Pose die Position und/oder Orientierung in jeweils bis zu drei Freiheitsgraden und damit insgesamt bis zu sechs Freiheitsgraden. Die Pose ist nur vorzugsweise vollständig in allen Freiheitsgraden bestimmt, in manchen Situationen kommt es nur auf einen Teil der Freiheitsgrade an. Die Pose ist für die einzelnen Glieder unterschiedlich und die Validierung auf ein erstes Glied bezogen, wobei die Validierung mehrerer Posen mehrerer Glieder ebenfalls vorstellbar ist. Dabei ist erstes Glied vorerst nur ein Name für das zur Validierung herausgegriffene Glied und könnte beispielsweise auch ein mittleres Glied sein.

Es werden Informationen über die Pose aus zwei verschiedenen Quellen genutzt. Die erste Quelle ist der Roboter selbst beziehungsweise dessen Robotersteuerung, der seine eigene Pose beispielsweise aus der Messung von Winkelstellungen an seinen Gelenken kennt. Die Funktion Pose(t) zu verschiedenen Zeitpunkten t beschreibt die vollständige Kinematik des Roboters. Diese Information ist jedoch nicht sicher im einleitend genannten Sinne einschlägiger Sicherheitsnormen für Maschinensicherheit oder Zusammenarbeit von Personen und Robotern beziehungsweise Unfallvermeidung an Robotern. Weitere Kinematikinformationen werden über einen Sensor als zweite Quelle gewonnen, der die Bewegung des Roboters mitvollzieht und insbesondere daran mitbewegt angebracht ist.

Die von der Robotersteuerung bestimmt Pose wird aus den Kinematikinformationen validiert, also geprüft, bestätigt oder abgesichert, um festzustellen, wenn die von der Robotersteuerung bestimmte Pose fehlerhaft ist beziehungsweise im Sinne funktionaler Sicherheit zu gewährleisten, dass die Pose korrekt ist. Auch wenn dies so beschrieben ist, dass die von der Robotersteuerung bestimmte Pose die führende Größe ist, die validiert wird, lässt sich dies ebenso andersherum lesen, d.h. die Kinematikinformationen werden durch die vom Roboter bestimmte Pose bestätigt. Das Ergebnis ist jedenfalls eine sichere Bestimmung der Pose zumindest in den relevanten Freiheitsgraden. Diese sichere Information kann während des Betriebs des Roboters insbesondere zu dessen dynamischer Absicherung mit enger Zusammenarbeit mit Personen genutzt werden.

Die Erfindung geht von dem Grundgedanken aus, als die zweite Quelle zur Erfassung von Kinematikinformationen mehrere Initialsensoren zu verwenden, die jeweils an einem Glied mitbewegt werden und für das jeweilige Glied eine Orientierungsänderung oder Orientierung messen. Ein Inertialsensor nimmt originär nur eine Änderung in der Orientierung beziehungsweise eine Winkelgeschwindigkeit wahr. Dies jedoch kann integriert oder über die Zeit verfolgt werden, beispielsweise mit einem Kalman-Filter, so dass sich dann eine Orientierung ergibt. Im Folgenden wird daher manchmal vereinfachend davon gesprochen, dass ein Inertialsensor eine Orientierung misst, und das ist dann wie soeben dargelegt zu verstehen. Zur Messung eine Orientierungsänderung weist der Inertialsensor vorzugsweise einen Drehratensensor auf, auch als Gyrometer bezeichnet. Mit dem Inertialsensor wird eine Kinematikinformation in bis zu drei Freiheitsgraden der Rotation oder Orientierung erfasst.

Anders als beispielsweise Drehgeber, die Roboter zur Messung ihrer Gelenkstellungen einsetzen, erfasst ein Inertialsensor eine Orientierung in seinem eigenen Bezugssystem beziehungsweise nach Kalibrierung oder mit Hilfe zusätzlicher Messinformationen beispielsweise des Gravitations- oder Erdmagnetfelds absolut in Weltkoordinaten, nicht relativ zum übergeordneten Glied. Somit wäre es vorstellbar, die Orientierung des ersten Gliedes allein mit dessen einzigem Inertialsensor zu validieren. Dies genügt aber nicht für eine Validierung der Pose, da sich die Orientierung auf vielfältige Weise aus unterschiedlichen Posen der übergeordneten Glieder ergeben könnte, die zu ganz unterschiedlichen Positionen führen. Um die Pose zu validieren, ist daher auch Kenntnis über die Orientierung weiterer Glieder erforderlich, und deshalb sind erfindungsgemäß mehrere Inertialsensoren an mehreren Gliedern eingesetzt.

Die Erfindung hat den Vorteil, dass mit einer vergleichsweise einfachen und kostengünstigen Sensorik eine Validierung ermöglicht wird. Durch Validierung der Orientierung der einzelnen Glieder und damit Gelenkstellungen lässt sich jeweils auf die Pose des Gliedes und damit sukzessive auch diejenige des ersten Glieds schließen. Da Orientierungsänderungen und Orientierungen gemessen werden, ist das Fehlerverhalten sehr viel günstiger als beispielsweise eine doppelte Integration eine Beschleunigung, die ein Inertialsensor an sich auch messen könnte. In der Anwendung kann eine angemessene Balance zwischen Sicherheitsniveau und Aufrechterhaltung der Verfügbarkeit gewählt werden. Die validierte Pose bildet die Grundlage für eine angepasste Absicherung wie dynamische Schutzfelder oder Speed-and-Separation-Monitoring und ermöglicht eine engere Zusammenarbeit von Mensch und Roboter.

Aus den Orientierungen oder Orientierungsänderungen wird bevorzugt eine relative Orientierung eines jeweiligen Gliedes zu seinem übergeordneten Glied bestimmt. Wie schon erwähnt, werden Orientierungen oder Orientierungsänderungen zunächst in einem eigenen Bezugssystem beziehungsweise durch weitere Schritte absolut oder in Weltkoordinaten berechnet. Der Roboter selbst beziehungsweise dessen Robotersteuerung misst jedoch Gelenkstellungen, und das ist keine absolute Orientierung, sondern die relative Orientierung zwischen zwei Gliedern. Daher ist eine Umrechnung vorteilhaft, um Vergleichbarkeit herzustellen beziehungsweise um mit einem analogen Vorgehen wie die Robotersteuerung die Pose des ersten Gliedes aus den Orientierungen zu rekonstruieren. Um herauszufinden, wie die Glieder zueinanderstehen, kann beispielsweise mit der Orientierung eines untersten Gliedes begonnen werden, das sich gegen einen festen Bezug im Raum bewegt, so dass hier absolute und relative Koordinaten miteinander vergleichbar sind. Von dort aus folgt ein sukzessives Vorangehenden längs der weiteren Glieder bis zu dem ersten Glied.

Aus den Orientierungen oder Orientierungsänderungen und einer bekannten Länge der Glieder wird bevorzugt eine Position des ersten Glieds bestimmt. Ein Inertialsensor an dem ersten Glied misst nur eine Orientierung, so dass zur Validierung der Pose die Position fehlt. Aus den Orientierungen der übergeordneten Glieder und in Kenntnis der Länge der starren Glieder kann jedoch die fehlende Position berechnet und somit die vollständige Pose validiert werden. In einem bevorzugten Verfahren werden die einzelnen relativen Orientierungen zum jeweils übergeordneten Glied bestimmt, wie im Vorabsatz erläutert, damit sind dann alle relevanten Gelenkstellungen und Längen der starren Glieder und somit alle Eingangsgrößen für die Rekonstruktion der Pose des ersten Gliedes bekannt.

Eine von der Robotersteuerung bestimmte Orientierung mindestens eines Gliedes wird bevorzugt mit einer durch die Inertialsensoren bestimmten Orientierung verglichen, insbesondere für mehrere Glieder oder alle Glieder. In vielen Anwendungen kommt es nur auf die Pose des ersten Gliedes an. In manchen Fällen sollen jedoch auch Posen mehrerer Glieder validiert sein, oder die Validierung weiterer Glieder bringt ein noch höheres Sicherheitsniveau. Daher ist denkbar, von der Robotersteuerung nicht nur die Pose des ersten Gliedes abzufragen, sondern auch die Orientierungen anderer Glieder, um diese einzeln zu validieren. Stimmen insbesondere alle Orientierungen, so ist wegen der starren Glieder auch die richtige Position garantiert. Die einzelne Validierung von Orientierungen unterstützt auch die Diagnostik, beispielsweise das Auffinden eines defekten Inertialsensors oder eines der von der Robotersteuerung verwendeten Positionssensoren.

Das erste Glied weist bevorzugt einen Endeffektor auf. Andere Begriffe für den Endeffektor sind Armspitze, Hand oder Werkzeugspitze (TCP, Tool Center Point). Häufig ist das der für eine Validierung interessanteste Teil des Roboters, zumal hiervon in aller Regel die größte Gefahr ausgeht. Wird der Inertialsensor nicht direkt an der Armspitze angebracht, sondern beispielsweise an einem absichernden Sicherheitssensor, so ist die entsprechende starre Transformation für den Versatz bei der Bestimmung der Pose und der Validierung vorzugsweise zu berücksichtigen. Das gilt im Übrigen auch für die Anbringung von Inertialsensoren an anderen Gliedern.

Vorzugsweise werden Initialsensoren an allen Gliedern mitbewegt beziehungsweise sind dort angebracht. Damit kann die ganze Kette von Orientierungen der einzelnen Glieder überwacht und insbesondere die Pose eines Endeffektors validiert werden.

Mindestens einer der Inertialsensoren weist bevorzugt einen Beschleunigungssensor (Accelerometer) und/oder einen Magnetfeldsensor auf, und durch Sensorfusion wird eine verbesserte Orientierungsänderung oder Orientierung bestimmt. Vorzugsweise gilt dies für mehrere oder alle Inertialsensoren. Die zentrale Kinematikinformation für das erfindungsgemäße Verfahren ist eine Orientierungsänderung oder Orientierung, und das misst vorzugsweise einen Drehratensensor oder Geometer. Ein Beschleunigungssensor beispielsweise misst in Translation, und das ist nicht unmittelbar nützlich für eine Orientierung. Ein Magnetfeldsensor wird allein höchstens eine nur schlechtere Messung einer Orientierung erreichen. Durch Sensorfusion verschiedener Messdaten kann jedoch eine insgesamt verbesserte Messung auch der Orientierungsänderungen oder Orientierung erreicht werden. Die Funktionalität für die Sensorfunktion kann bereits in den Inertialsensor integriert oder übergeordnet implementiert werden.

Die Robotersteuerung berechnet bevorzugt die Vorwärtskinematik des Roboters und gibt eine damit bestimmte Pose aus. Vorwärtskinematik ist ein Begriff aus der Robotik. Sie beschreibt, wie sich die Kinematik des Endeffektors aus den einzelnen Gelenkwinkeln eines seriellen Manipulators insbesondere mit Hilfe der Denavit-Hartenberg-Transformation ermitteln lässt. Die Robotersteuerung berechnet die Vorwärtskinematik ohnehin für ihre Bewegungsplanung und Bewegungsausführung. Auf diese Information des Roboters kann das erfindungsgemäße Verfahren zurückgreifen. Zu beachten ist, dass die Robotersteuerung dabei auf Gelenkstellungen relativ zum übergeordneten Glied zurückgreift. Eine solche Information liefert ein Inertialsensor nicht, der in seinem eigenen Bezugssystem oder absolut in Weltkoordinaten misst. Die Validierung über Inertialsensoren kann sich an die Berechnung einer Vorwärtskinematik anlehnen, dies ist aber aus den genannten Gründen nicht dasselbe Vorgehen wie dasjenige der Robotersteuerung. Diese Diversität ist für ein hohes Sicherheitsniveau sogar gewünscht.

Orientierungen oder Orientierungsinformationen werden bevorzugt zumindest teilweise in Quaternionen verarbeitet und insbesondere für Vergleiche in Eulerwinkel umgerechnet. Bei Aneinanderreihung von Rotationen in Eulerwinkeln kann es zu einem sogenannten "Gimbal Lock" kommen. Das ist der Verlust eines Freiheitsgrades durch ungünstige Abhängigkeiten, der Begriff leitet sich von einer kardanischen Aufhängung ab, bei der in diesem kritischen Zustand zwei Drehachsen parallel zueinander liegen. Die Problematik tritt bei der Berechnung in Quaternionen nicht auf, und durch anschließende Umrechnung in Eulerwinkeln wird wieder eine gewohnte und mit den Kinematikinformationen vergleichbare Repräsentation erreicht.

Der Inertialsensor stellt bevorzugt Kinematikinformationen in Echtzeit bereit, insbesondere mit mindestens der Messrate, mit der die Robotersteuerung eine Pose bestimmt. Damit ist sichergestellt, dass die Validierung vollständig und rechtzeitig möglich ist.

In dem Bewegungsablauf des Roboters ist bevorzugt mindestens ein besonderer Wegpunkt vorgesehen, wobei die Validierung nur in einer Umgebung des besonderen Wegpunkts erfolgt und/oder die Validierung zusätzlich durch den besonderen Wegpunkt gestützt wird. Ein besonderer Wegpunkt auf der Roboterbahn, wofür sogleich Beispiele gegeben werden, kann eine erhöhte Gefahr bedeuten. Dementsprechend besteht für solche Positionen ein besonderer Validierungsbedarf, während an anderen Orten ein Fehler in der Pose möglicherweise gar nicht sicherheitsrelevant ist. Umgekehrt ist denkbar, dass an einem besonderen Wegpunkt über eine dritte Quelle weiterer Informationen verfügbar sind, mit denen zusätzlich validiert werden kann.

Der besondere Wegpunkt ist bevorzugt ein sicherer Nullpunkt des Roboters oder ein Umschaltpunkt, ein Arbeitspunkt oder ein Prüfpunkt, wobei an einem Umschaltpunkt ein Arbeitsvorgang beginnt oder endet, an einem Arbeitspunkt der Roboter mit einem Werkstück in Berührung kommt und an einem Prüfpunkt eine Funktionsprüfung eines Sicherheitssensors zum Absichern des Roboters erfolgt. Der sichere Nullpunkt ist eine Position oder Pose, die bereits ohne zusätzliche Validierung von der Robotersteuerung sicher bereitgestellt wird. Hier kann eine zusätzliche Validierung oder eine Verankerung der Validierung anhand der besonders verlässlichen Pose erfolgen. Eine besondere Gefahr besteht in unmittelbarer Umgebung des Arbeitspunktes, weil hier der Roboter bestimmungsgemäß ein Werkstück berührt und dabei ein Körperteil quetschen könnte. In gewissem Maße gilt das für die gesamte Phase zwischen Umschaltpunkt, Arbeitspunkt und Rückkehr zum Umschaltpunkt. In anderen Abschnitten der Bewegungsbahn ist möglicherweise ein geringeres Sicherheitsniveau ausreichend. Alternativ ist denkbar, die Pose stets über die gesamte Bewegungsbahn hinweg zu validieren. Umschaltpunkt, Arbeitspunkt und Prüfpunkt werden in einigen Anwendungen durch eine weitere Quelle bestimmt, insbesondere einen Sicherheitssensor, der diese Punkte aus seinen eigenen Sensorinformationen wiederfindet. Solche Informationen können ähnlich dem sicheren Nullpunkt für eine noch verlässlichere Validierung genutzt werden.

Der Roboter wird vorzugsweise zur Vermeidung von Kollisionen von einem mitbewegten Sicherheitssensor abgesichert, wobei der Sicherheitssensor insbesondere seine Absicherung an die validierte Pose anpasst und/oder einen besonderen Wegpunkt erkennt. Der mitbewegte Sicherheitssensor überwacht besonders bevorzugt ein Schutzfeld, also einen durch eine 2D- oder 3D-Geomtrie definierten Teilbereich seines Erfassungsbereichs, wobei diese Geometrie durch Anordnung und Bauart des Sensors bedingt und/oder konfiguriert sein kann und Eingriffe in ein Schutzfeld zu einer sicherheitsgerichteten Reaktion des Roboters führen, wie einem Verlangsamen, Ausweichen oder Anhalten. Besonders bevorzugt ist das Schutzfeld eine virtuelle Schutzglocke aus berührungslose distanzmessenden Strahlen oder Flächen, insbesondere mit einem Lichtlaufzeitverfahren, wie in den einleitend genannten Dokumenten DE 10 2015 112 656 A1, DE 10 2019 110 882 A1 oder EP 3 744 482 A1. Dank des erfindungsgemäßen Verfahrens kann der Sicherheitssensor auf sicher erfasste Posen zurückgreifen und dies für die Anpassung seiner Schutzfelder oder Schutzglocken ausnutzen. Ähnliches gilt für alternative Absicherungskonzepte wie Speed-and-Separation. Der Sicherheitssensor kann außerdem noch einmal unabhängig besondere Wegpunkte bestätigen wie im Vorabsatz erläutert. Der Inertialsensor kann an dem Sicherheitssensor angebracht oder sogar darin integriert werden.

Ein Inertialsensor ist bevorzugt nachträglich an dem Roboter angebracht, und die Validierung der Pose des Roboters wird nachgerüstet. Dadurch ist es sehr einfach möglich, einen Roboter, der zuvor nur unsichere Informationen über seine Posen ausgeben konnte, mit der zusätzlichen Funktionalität des erfindungsgemäßen Verfahrens auszurüsten. Das erleichtert dessen Absicherung und ermöglicht engere Kooperationen, die der Roboter zuvor nicht unterstützen konnte.

Die Kinematikinformationen werden bevorzugt mit einem Filter zum Unterdrücken von erwarteten Vibrationen der Roboterbewegung gefiltert, wobei das Filter insbesondere in einer Einlernphase unter Bewegen des Roboters parametriert wird. Der Inertialsensor ist meist empfindlich genug, um auch die Vibrationen der Roboterbewegungen wahrzunehmen, die jedoch die Kinematikinformationen verfälschen würden. Daher ist es sinnvoll, die Effekte der Vibrationen herauszufiltern. Das Filter kann in einer Einlernphase für die tatsächlich auftretenden Vibrationen geeignet parametriert werden. Zwar ist vor allem ein Beschleunigungssensor empfindlich für derartige Vibrationen, in gewissen Maßen ist jedoch auch ein Drehratensensor davon betroffen. Außerdem wirken sich bei bevorzugter Kombination mehrerer Messprinzipien eines Inertialsensors durch Vibrationen verfälschte Beschleunigungen nach der Sensorfusion auch auf die Orientierungen aus.

Ein Inertialsensor weist bevorzugt ein Barometer auf, mit dem eine Höhenposition der Pose der Robotersteuerung validiert wird. Sofern ein solcher Messwert verfügbar ist, bietet das eine weitere, unabhängige Quelle von Informationen über einen Teil der Pose, nämlich die Position in Z-Richtung. Diese Information kann vorteilhaft für eine weiter verbesserte Validierung herangezogen werden.

Die erfindungsgemäße sichere Posenbestimmungsvorrichtung zum Validieren einer Position und/oder einer Orientierung eines ersten Gliedes eines mehrgliedrigen Roboters mit jeweils einem Glied zwischen den Gliedern weist eine Steuer- und Auswertungseinheit, eine Schnittstelle zu einer Robotersteuerung des Roboters und mehrere mit jeweils einem Glied mitbewegte Inertialsensoren auf, insbesondere mit einem Drehratensensor.

Dabei ist das erfindungsgemäße Verfahren in einer seiner Ausführungsformen in der Steuer- und Auswertungseinheit implementiert. Vorzugsweise wird ein System aus Roboter und sicherer Posenbestimmungsvorrichtung gebildet. Zu diesem System gehört bevorzugt ein mitbewegter Sicherheitssensor zur Vermeidung von Kollisionen mit dem Roboter beziehungsweise zum Schutz vor Unfällen und Verletzungen von Personen. Zudem ist zusätzliche Steuer- und Auswertungsfunktionalität in beliebiger direkt oder per Netzwerk angeschlossener Hardware denkbar, insbesondere einer Sicherheitssteuerung.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Roboters mit daran angebrachten Inertialsensoren zur Validierung der Roboterpose;
- Fig. 2: eine schematische Darstellung der verschiedenen Komponenten und der für die Validierung der Roboterpose verwendeten Informationen;
- Fig. 3: beispielhafte Messdaten für die Validierung einer Orientierung; und
- Fig. 4: eine Darstellung eines Roboters mit nachgerüsteten Inertialsensoren.

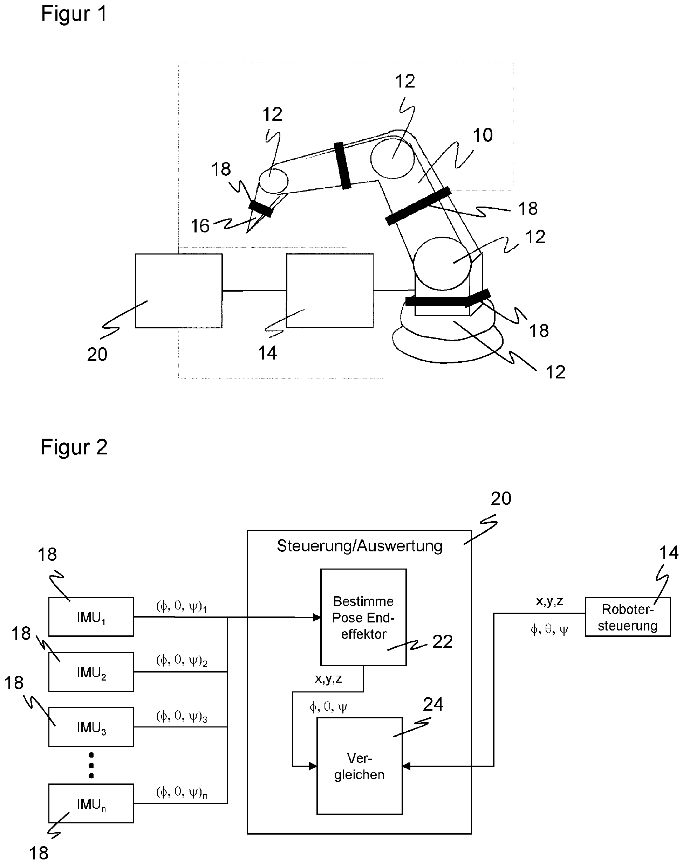

Figur 1 zeigt eine Übersichtsdarstellung eines Roboters 10 oder Roboterarms mit einer Vielzahl von Gelenken 12. Die Stellungen der Gelenke 12 werden durch nicht gezeigte Positionssensoren des Roboters 10 überwacht, beispielsweise Drehgeber. Diese Positionssensoren sind mit einer Robotersteuerung 14 verbunden, die anders als dargestellt auch in den Roboter 10 integriert sein kann. Die Robotersteuerung 14 ist zum einen für sämtliche Bewegungen und Abläufe des Roboters 10 zuständig, worauf hier nicht näher eingegangen wird. Außerdem empfängt sie die Sensordaten der Positionssensoren, um daraus die jeweilige Pose des Roboters 10 zu bestimmen. Das betrifft insbesondere die Pose eines Endeffektors 16 an der Spitze des Roboterarms. Die Berechnung der Kinematik des Endeffektors 16 aus den einander überlagernden Bewegungen der einzelnen Gelenke 12 wird auch als Vorwärtskinematik bezeichnet.

An den Gliedern des Roboters 10 sind jeweils Inertialsensoren 18 angebracht (IMU, Inertial Measurement Unit). Vorzugsweise soll die Pose des Endeffektors 16 validiert werden, und dafür wird eine Anzahl Inertialsensoren entsprechend der Anzahl beweglicher Glieder oder Gelenke 12 des Roboters 10 verbaut. Der Roboter 10 kann als serieller Manipulator aufgefasst werden. In anderen Ausführungsformen wird die Pose eines anderen Gliedes validiert und/oder es werden weniger Inertialsensoren 18 eingesetzt. Jeder der Inertialsensoren 18 kann mehrere Einzelsensoren zusammenfassen, wie ein Accelerometer, ein Gyrometer oder ein Magnetometer, und misst eine Orientierungsänderung oder Winkelgeschwindigkeit in bis zu drei Freiheitsgraden der Rotation. Durch geeignete Integration oder Filterung wird die Orientierungsänderung in eine Orientierung umgerechnet. Dabei sind Kalibrierungen oder eine Ausrichtung an zusätzlichen Messgrößen denkbar, wie dem Gravitations- oder Erdmagnetfeld, um die Orientierung in absoluten Weltkoordinaten statt einem eigenen Koordinatensystem des jeweiligen Inertialsensors 18 zu bestimmen.

Die eigenen, nicht gezeigten Positionssensoren des Roboters 10 sind selbst vorzugsweise keine sicheren Sensoren gemäß den einleitend genannten Normen, die Vorwärtskinematik und damit die jeweilige Pose des Roboters 10 beziehungsweise von dessen Endeffektor 16 sind somit keine sicheren Größen im Sinne funktionaler Sicherheit. Deshalb wird die Pose mit Hilfe der Inertialsensoren 18 validiert. Alternativ ist denkbar, dass die Pose doch sicher erfasst ist und mit Hilfe der Inertialsensoren 18 ein höheres Sicherheitsniveau erreicht wird.

Eine Steuer- und Auswertungseinheit 20, vorzugsweise eine Sicherheitssteuerung, ist mit der Robotersteuerung 14 und den Inertialsensoren 18 verbunden. Sie hat dadurch Zugriff auf die Vorwärtskinematik und damit die aktuell bestimmte Pose des Roboters 10 und die Messdaten der Inertialsensoren 18. Somit kann die Steuer- und Auswertungseinheit 20 die Pose validieren, wie im Folgenden noch näher erläutert. Die Inertialsensoren 18 sind vorzugsweise echtzeitfähig mit einer Messrate, die mindestens so schnell ist wie die Aktualisierung der Vorwärtskinematik, so dass diese kontinuierlich validiert werden kann.

Die in Figur 1 gezeigte klare Aufteilung der Auswertungsfunktionalität in einer Robotersteuerung 14 und einer externen Steuer- und Auswertungseinheit 20 dient vor allem der übersichtlichen Erläuterung, es sind andere Aufteilungen über mehr oder weniger Hardwaremodule denkbar. Die Robotersteuerung 14 ist auch in praktischen Anwendungsfällen vorzugsweise separiert und nur über ihre vom Hersteller spezifizierten Schnittstellen ansprechbar. Trotzdem ist denkbar, die Funktionalität der Steuer- und Auswertungseinheit 20 zumindest teilweise in die Robotersteuerung 14 zu integrieren. Andererseits kann die Steuer- und Auswertungseinheit 20 zumindest teilweise in die Inertialsensoren 18 oder in einen zusätzlichen, nicht gezeigten Sicherheitssensor zur Kollisionsvermeidung des Roboters 10 integriert oder für diesen Sicherheitssensor zuständig sein. Die Verbindungen können jeweils drahtlos oder drahtgebunden sowie direkt oder indirekt beispielsweise durch eine übergeordnete Steuerung, wie eine Roboterzellensteuerung, realisiert sein.

Figur 2 zeigt nochmals die für die Validierung der Pose des Roboters 10 maßgeblichen Komponenten in einer schematischen Darstellung. Es ist eine Art Maximalkonfiguration gezeigt, in der alle sechs Freiheitsgrade der Vorwärtskinematik beziehungsweise der Pose des Roboters 10 mit Hilfe der Inertialsensoren 18 validiert werden. In verschiedenen Ausführungsformen können auch nur einige Freiheitsgrade validiert werden, beispielsweise diejenigen der Translation oder diejenigen der Rotation oder solche, die auf bestimmte Ebenen, Geraden oder Drehachsen beschränkt sind.

Es scheint zunächst naheliegend, Inertialsensoren 18 in der Form für eine Validierung zu verwenden, dass Beschleunigungen gemessen und zweifach integriert werden, so dass sie direkt mit der Pose von der Robotersteuerung 14 vergleichbar werden. Allerdings haben gerade bei zweifacher Integration schon kleine Messfehler der Beschleunigung beispielsweise durch Sensorrauschen einen großen Effekt auf die resultierende Position, dies noch umso mehr bei längeren Integrationszeiten. Das gilt ganz analog auf dem umgekehrten Weg, die Pose zweifach zu differenzieren und mit einer Beschleunigung zu vergleichen. Durch Aufbereitung der Messdaten oder den Einsatz geeigneter Filter lässt sich der Effekt reduzieren, was aber in der Praxis nur in einer nachträglichen Auswertung mit gezielter Filteranpassung gelingt. In Echtzeit unter Verwendung allgemeingültiger Filter werden keine befriedigenden Ergebnisse erzielt.

Stattdessen erfolgt die Validierung erfindungsgemäß anhand von Orientierungsinformationen der mehreren Inertialsensoren 18 an mehreren Gliedern oder Gelenken 12 des Roboters 10. Das ist die eine Quelle der Validierung, die in Figur 2 links dargestellt ist. Für die Bestimmung einer Orientierung, oder zunächst einer Orientierungsänderung und daraus dann einer Orientierung, sind Inertialsensoren 18 sehr gut geeignet, insbesondere Drehratensensoren beziehungsweise Gyrometer. Wie schon erwähnt, kann ein Inertialsensor 18 mehrere Einzelsensoren umfassen, also beispielsweise Gyrometer, Magnetometer und Accelerometer, wobei eine Sensorfusion der verschiedenen Datengeber zu den gewünschten Orientierungen oder Winkelinformationen führt. Auf einem der genannten Wege erzeugt jeder der n Inertialsensoren 18 Winkelinformationen (φ, θ, ψ)_{1..n} in bis zu drei Koordinaten der Rotation oder Orientierung, wobei alternativ zur Darstellung in Figur 2 nur Rohdaten übergeben werden und die Verrechnung zu den Orientierungen oder Winkelinformationen in der Steuer- und Auswertungseinheit 20 erfolgt.

Bei einer ausreichenden Anzahl von Inertialsensoren 18, insbesondere je einem Inertialsensor 18 je Glied oder Gelenk 12, und in Kenntnis der Abmessungen der Glieder des Roboters 10 lässt sich anhand der Orientierungen in einem Block 22 die Position jedes Glieds oder Gelenks 12 bis hin zu den Koordinaten des Endeffektors 16 gemäß den Gesetzen eines seriellen Manipulators geometrisch berechnen. Mit Position und Orientierung ist die vollständige Pose erfasst. Wählt man für jedes starre Glied ein eigenes Koordinatensystem, so genügen für die Berechnung einfache homogene Transformationen.

Andererseits berechnet die Robotersteuerung 14 als andere Quelle der Validierung, die in Figur 2 rechts dargestellt ist, fortlaufend aus den Messinformationen der nicht gezeigten Positionssensoren die Vorwärtskinematik, so dass die Position x, y, z und die Orientierung φ, θ, ψ allerdings noch nicht-sicher abgerufen werden können.

Die Steuer- und Auswertungseinheit 20 kann nun zur Validierung in einem Block 24 die beiden auf unterschiedlichen Wegen gewonnenen Posen miteinander vergleichen. Dies geschieht vorzugsweise in Echtzeit, und dafür ist die Abtastrate der Inertialsensoren 18 vorteilhaft mindestens so hoch wie die Ausgaberate der Vorwärtskinematik des Roboters 10. Bevorzugt werden Konfidenzintervalle nach IEC TS 62998 bestimmt, um festzulegen, wann eine Validierung noch als erfolgreich gilt. Schlägt eine Validierung fehlt, so wird vorzugsweise eine sicherheitsgerichtete Reaktion des Roboters 10 eingeleitet, die ihn verlangsamt, ausweichen lässt oder stoppt. Es ist denkbar, ein Signal für die sicherheitsgerichtete Reaktion an andere Sensoren oder Steuerungen weiterzugeben, die dann gegebenenfalls ihrerseits sicherheitsgerichtete Reaktionen auslösen.

Durch die Verwendung von Orientierungen werden fehlerbehaftete Integrationsschritte umgangen, weshalb die Pose mit hoher Konfidenz bestimmt und somit über einen längeren Zeitraum bis hin zu über den gesamten Prozess hinweg validiert werden kann. Ein weiterer Vorteil gegenüber der Verwendung von Beschleunigungen ist, dass sich die Orientierungen der einzelnen Gelenke kontinuierlich und nicht sprunghaft ändern und somit verlässliche Messungen mit stetigen Änderungen erfolgen. Die Beschleunigung dagegen zeigt starke Ausschläge in sehr kurzen Zeitintervallen am Anfang und Ende einer Bewegung, während in der eigentlichen Bewegung kaum oder gar nicht beschleunigt wird und aktuelle Messwerte der Beschleunigung folglich fehlen. Dieses unterschiedliche Verhalten kommt besonders bei den für einen Roboter 10 typischen linearen Bewegungen zum Tragen. Orientierungen sind somit wesentlich besser zu handhaben als Beschleunigungen, und Sprünge in den Messdaten für Orientierungen sind ein Indikator für Fehler in der Messung oder in der Anwendung.

Im Zusammenhang mit Orientierungen gibt es noch die Problematik des sogenannten "Gimbal Lock": bei der Multiplikation von mehreren Winkeln im Eulerraum kann durch verschiedene Drehungen mehrerer Achsen die gleiche Orientierung resultieren. Das System verliert dann einen Freiheitsgrad, was zu Berechnungsfehlern führt. Daher ist es vorteilhaft, zunächst mit Quaternionen zu arbeiten und insbesondere die Verkettungen der Rotationen im Quaternionenschiefkörper zu berechnen. In dieser Repräsentation treten besagte Mehrdeutigkeiten nicht auf, es gibt keinen Gimbal Lock. Für eine gewohntere Repräsentation können die Quaternionen in gewünschten Phasen wieder in Eulerwinkel umgerechnet werden.

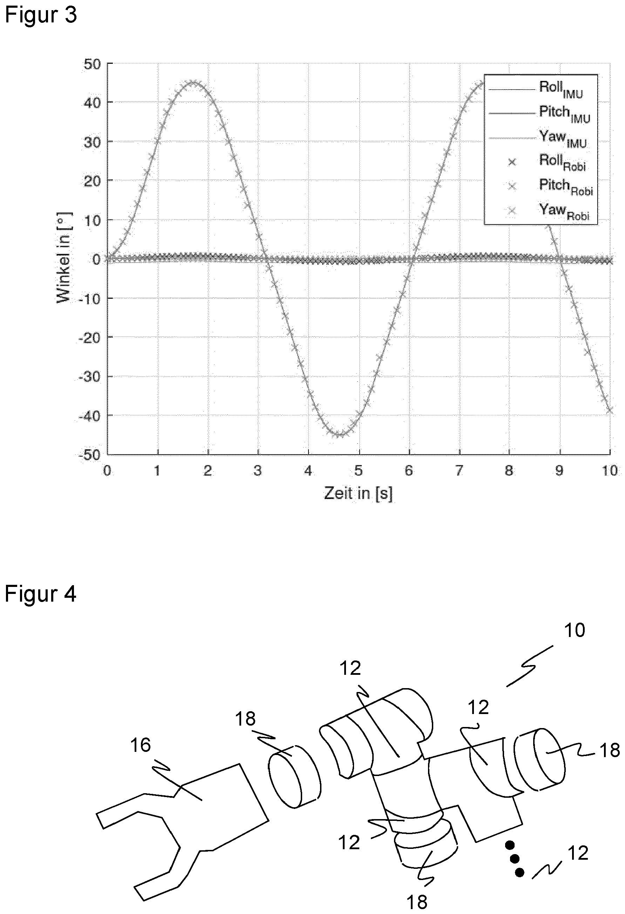

Figur 3 zeigt einen Vergleich einer von der Robotersteuerung 14 und einer über einen Inertialsensor 18 bestimmten Orientierung. Die Winkel φ, θ, ψ sind hier mit Roll, Pitch und Yaw bezeichnet, wobei der Index IMU für einen Inertialsensor 18 und der Index Robi für die Robotersteuerung 14 als Quelle steht. Für diese Messung wurde bewusst nur ein einziges Gelenk 12 verdreht, und zwar um ±45° um den zweiten Winkel Pitch. Es wird eine sehr gute Übereinstimmung erzielt. Bei Drehungen um mehrere Winkel und/oder Gelenke 12 wird das Bewegungsmuster sehr viel komplexer, aber durch die sukzessive Zerlegung in einzelne Rotationen einzelner Gelenke 12, die jeweils von einem eigenen Inertialsensor 18 gemessen werden, ist dies rechnerisch sehr gut in den Griff zu bekommen und zeigt auch im allgemeinen Fall gute Ergebnisse.

Die beschriebene Validierung kann über verschiedene Abschnitte der Bewegungsbahn des Roboters 10 oder verschiedene Arbeitsschritte variieren. Solche Abschnitte werden nun beispielhaft anhand besonderer Wegpunkte unterschieden, die aber nicht zwingend ausdehnungslos sein müssen. Ein Beispiel für einen besonderen Wegpunkt ist eine sichere Ausgangsposition (safe home position). Wenn die Bewegungsbahn diese sichere Ausgangsposition einbezieht, so kann hier die Validierung an einer weiteren Quelle erfolgen oder sich neu verankern, um aufgelaufene Driften zu eliminieren.

Weitere Beispiele sind ein Arbeitspunkt und ein Umschaltpunkt. Am Arbeitspunkt kommt der Endeffektor 16 mit einem Werkstück in Berührung, um es zu greifen oder anders zu bearbeiten. Am Umschaltpunkt beginnt und endet eine Annäherungsbewegung an den Arbeitspunkt. Das ist beispielsweise wichtig, um Schutzfelder eines Sicherheitssensors anzupassen, der nicht durch das Werkstück oder dessen Untergrund auslösen soll. In diesen Phasen ist die Absicherung besonders kritisch, und daher kann sich eine Validierung auf den Arbeitspunkt oder den Bereich zwischen Umschaltpunkt und Arbeitspunkt beschränken. Für andere Absicherungskonzepte, beispielsweise Speed-and-Separation-Monitoring, ist hingegen eine kontinuierliche Validierung über die gesamte Bewegungsbahn zu bevorzugen.

Umgekehrt ist ein Sicherheitssensor vorzugsweise in der Lage, den Umschaltpunkt und Arbeitspunkt anhand seiner eigenen Messungen zu erkennen. Damit gibt es eine weitere Informationsquelle ähnlich wie bei einer sicheren Ausgangsposition, die in die Validierung einbezogen werden kann oder mittels derer aufgelaufene Driften zurückgesetzt werden können. Ein weiterer besonderer Wegpunkt, an dem sich ein Sicherheitssensor selbst lokalisiert, ist der sogenannte Prüfpunkt. Das ist eine Position, in der sich der Sicherheitssensor selbst testet und dafür beispielsweise eine Referenzkontur wiedererkennt.

Figur 4 illustriert, dass die Validierung mittels Inertialsensoren 18 an praktisch jedem beliebigen Roboter 10 nachgerüstet werden kann. Dafür wird beispielsweise eine Art Adapter mit dem Inertialsensor 18 für den Endeffektor 16 verwendet. Ähnliche Adapter sind auch an anderen Gelenken 12 vorstellbar. Noch einfacher zu ergänzen sind speziell designte Endkappen mit einem Inertialsensor 18, wie in Figur 4 angedeutet. Durch das Nachrüsten mit Inertialsensoren 18 wird ein Roboter 10 nachträglich in die Lage versetzt, sichere, validierte Posen auszugeben und so viel enger zu kooperieren als zuvor.

Ein Inertialsensor 18 nimmt auch durch die Gelenkregelung beziehungsweise Roboterbewegungen entstehende Vibrationen wahr. Dies betrifft vor allem den besonders messempfindlichen Beschleunigungssensor, aber auch einen Drehratensensor, und zudem können sich Fehler eines Beschleunigungssensors indirekt über eine bevorzugte Sensorfusion auch auf die Orientierungen auswirken. Deshalb wird vorzugsweise ein Filter eingesetzt, das charakteristische Anteile derartiger Vibrationen unterdrückt. Die Filtereinstellungen, insbesondere ein Passband zum Ausblenden bestimmter nieder- oder hochfrequenter Störanteile, können in einem Einlernverfahren bestimmt werden, in dem der Roboter 10 typische Bewegungsmuster vollzieht.

In einer vorteilhaften Kalibration wird zum einen ein möglicher Versatz in Translation und/oder Orientierung zwischen jeweiligem Inertialsensor 18 und seinem Bezugspunkt an dem zugehörigen Glied ermittelt. In einer Kalibierfahrt können ferner die jeweiligen Konfidenzintervalle der Messwerte bestimmt werden. Auch ein Inertialsensor 18 wird vorteilhafterweise anfänglich oder sogar zyklisch oder auf Anforderung vor einem Validierungsauftrag oder bei Anforderung einer Sicherheitsfunktion kalibriert, insbesondere hinsichtlich seiner Nordausrichtung.

In seiner Nordausrichtung ist ein Inertialsensor 18 potentiell anfällig. Um sie stabil zu halten, kann ein sogenanntes AHRS verwendet werden (Attitude Heading Reference System). Allerdings wird ein Magnetometer unter anderem durch die Regelungsströme für die Antriebe in den Gelenken 12 des Roboters 10 gestört. Daher sind Abschirmmaßnahmen etwa mit µ-Metall an relevanten Stellen denkbar, die aber das Erdmagnetfeld weiterhin erfassbar lassen. Ein nicht-metallisches Gehäuse verhindert, dass dort störende Magnetfelder induziert werden.

Einige Inertialsensoren 18 umfassen auch ein Barometer. Das Auflösungsvermögen der Höhenbestimmung liegt bereits heute unter 1 m und wird voraussichtlich in den kommenden Jahren signifikant weiter verbessert. Damit ist eine zusätzliche Validierung der Höhe oder Z-Koordinate denkbar.

Ein jeweiliger Inertialsensor 18 muss nicht separat an dem Endeffektor 16 oder sonstigen Glied des Roboters 10 verbaut werden. Es sind Kombinationen mit anderen Elementen denkbar, etwa mit anderer Sensorik, die am Roboter 10 geführt wird. Dazu zählen der mehrfach erwähnte Sicherheitssensor oder eine Kamera zur sichtgestützten Roboterführung (Vision Guidance Camera). Ein jeweiliger Versatz zur Bezugspose der Vorwärtskinematik der Robotersteuerung 14 sollte berücksichtigt werden. Die weitere Sensorik kann im Übrigen einen zusätzlichen Kanal für die Validierung darstellen oder einen der beiden diskutierten Kanäle ersetzen.

Je nach Sicherheitsniveau kann gemäß IEC 61508 eine homogen redundante Architektur verfolgt werden, um eine Zweikanaligkeit herzustellen. Es ist ebenso vorstellbar, dass zwar die Sensorik redundant verbaut wird, dass aber beispielsweise unterschiedliche Fusionsalgorithmen verwendet werden, um die Validierungsgrößen abzuleiten.

## Patentansprüche

1. Verfahren zum Validieren einer Pose mit einer Position und/oder einer Orientierung eines ersten Gliedes (16) eines mehrgliedrigen Roboters (10) mit jeweils einem Gelenk (12) zwischen den Gliedern, bei dem die Pose zumindest teilweise durch eine Robotersteuerung (14) des Roboters (10) und eine weitere Kinematikinformation der Pose aus Sensorinformationen eines mit dem Roboter (10) mitbewegten Sensors (18) bestimmt und die von der Robotersteuerung (14) bestimmte Pose anhand der Kinematikinformation validiert wird,
**dadurch gekennzeichnet,**
**dass** mehrere Inertialsensoren (18), insbesondere mit einem Drehratensensor, an jeweils einem Glied mitbewegt werden, die als Kinematikinformation eine Orientierungsänderung oder Orientierung des jeweiligen Gliedes bestimmen.

2. Verfahren nach Anspruch 1,
wobei aus den Orientierungen oder Orientierungsänderungen eine relative Orientierung eines jeweiligen Gliedes zu seinem übergeordneten Glied bestimmt wird.

3. Verfahren nach Anspruch 1 oder 2,
wobei aus den Orientierungen oder Orientierungsänderungen und einer bekannten Länge der Glieder eine Position des ersten Glieds bestimmt wird.

4. Verfahren nach einem der vorhergehenden Ansprüche,
wobei eine von der Robotersteuerung (14) bestimmte Orientierung mindestens eines Gliedes mit einer durch die Inertialsensoren (18) bestimmten Orientierung verglichen wird, insbesondere für mehrere Glieder oder alle Glieder.

5. Verfahren nach einem der vorhergehenden Ansprüche,
wobei das erste Glied einen Endeffektor (16) aufweist und/oder wobei an allen Gliedern jeweils ein Inertialsensor (18) mitbewegt wird.

6. Verfahren nach einem der vorhergehenden Ansprüche,
wobei mindestens einer der Inertialsensoren (18) einen Beschleunigungssensor und/oder einen Magnetfeldsensor aufweist und durch Sensorfusion eine verbesserte Orientierungsänderung oder Orientierung bestimmt.

7. Verfahren nach einem der vorhergehenden Ansprüche,
wobei die Robotersteuerung (14) die Vorwärtskinematik des Roboters (10) berechnet und eine damit bestimmt Pose ausgibt.

8. Verfahren nach einem der vorhergehenden Ansprüche,
wobei Orientierungen oder Orientierungsinformationen zumindest teilweise in Quaternionen verarbeitet und insbesondere für Vergleiche in Eulerwinkel umgerechnet werden.

9. Verfahren nach einem der vorhergehenden Ansprüche,
wobei der Inertialsensor (18) Kinematikinformationen in Echtzeit bereitstellt, insbesondere mit mindestens der Messrate, mit der die Robotersteuerung (14) eine Pose bestimmt.

10. Verfahren nach einem der vorhergehenden Ansprüche,
wobei in dem Bewegungsablauf des Roboters (10) mindestens ein besonderer Wegpunkt vorgesehen ist, und wobei die Validierung nur in einer Umgebung des besonderen Wegpunkts erfolgt und/oder die Validierung zusätzlich durch den besonderen Wegpunkt gestützt wird, wobei der besondere Wegpunkt insbesondere ein sicherer Nullpunkt des Roboters (10) oder ein Umschaltpunkt, ein Arbeitspunkt oder ein Prüfpunkt ist, wobei an einem Umschaltpunkt ein Arbeitsvorgang beginnt oder endet, an einem Arbeitspunkt der Roboter (10) mit einem Werkstück in Berührung kommt und an einem Prüfpunkt eine Funktionsprüfung eines Sicherheitssensors zum Absichern des Roboters (10) erfolgt.

11. Verfahren nach einem der vorhergehenden Ansprüche,
wobei der Roboter (10) zur Vermeidung von Kollisionen von einem mitbewegten Sicherheitssensor abgesichert wird und wobei der Sicherheitssensor insbesondere seine Absicherung an die validierte Pose anpasst und/oder einen besonderen Wegpunkt erkennt.

12. Verfahren nach einem der vorhergehenden Ansprüche,
wobei ein Inertialsensor (18) nachträglich an dem Roboter (10) angebracht und
die Validierung der Pose des Roboters (10) nachgerüstet wird.

13. Verfahren nach einem der vorhergehenden Ansprüche,
wobei die Kinematikinformationen mit einem Filter zum Unterdrücken von erwarteten Vibrationen der Roboterbewegung gefiltert werden, wobei das Filter insbesondere in einer Einlernphase unter Bewegen des Roboters (10) parametriert wird und/oder wobei ein Inertialsensor (18) ein Barometer aufweist, mit dem eine Höhenposition der Pose der Robotersteuerung (14) validiert wird.

14. Sichere Posenbestimmungsvorrichtung zum Validieren einer Pose mit einer Position und/oder einer Orientierung eines ersten Gliedes (16) eines mehrgliedrigen Roboters (10) mit jeweils einem Gelenk (12) zwischen den Gliedern, die eine Steuer- und Auswertungseinheit (20), eine Schnittstelle zu einer Robotersteuerung (14) des Roboters (10) und einen mit dem Roboter (10) mitbewegt montierten Sensor (18) aufweist,
**dadurch gekennzeichnet,**
**dass** sichere Posenbestimmungsvorrichtung mehrere mit jeweils einem Glied mitbewegte Inertialsensoren (18) aufweist, insbesondere mit einem Drehratensensor, und dass die Steuer- und Auswertungseinheit (20) für ein Verfahren nach einem der vorhergehenden Ansprüche ausgebildet ist.

15. System mit einem Roboter (10) und einer sicheren Posenbestimmungsvorrichtung nach Anspruch 14, wobei das System insbesondere einen mitbewegten Sicherheitssensor zur Vermeidung von Kollisionen aufweist.

## Geänderte Patentansprüche

### Geänderte Patentansprüche gemäss Regel 137(2) EPÜ.

1. Verfahren zum Validieren einer Pose mit einer Position und/oder einer Orientierung eines ersten Gliedes (16) eines mehrgliedrigen Roboters (10) mit jeweils einem Gelenk (12) zwischen den Gliedern, bei dem die Pose zumindest teilweise durch eine Robotersteuerung (14) des Roboters (10) und eine weitere Kinematikinformation der Pose aus Sensorinformationen mindestens eines an einem Glied mit dem Roboter (10) mitbewegten Inertialsensors (18) bestimmt und die von der Robotersteuerung (14) bestimmte Pose anhand der Kinematikinformation validiert wird, wobei der mindestens eine Inertialsensor (18) als Kinematikinformation eine Orientierungsänderung oder Orientierung des Gliedes bestimmt und eine von der Robotersteuerung (14) bestimmte Orientierung mindestens eines Gliedes mit einer durch die Inertialsensoren (18) bestimmten Orientierung verglichen wird,
**dadurch gekennzeichnet,**
**dass** mehrere Inertialsensoren (18) an jeweils einem Glied mitbewegt werden und die Orientierungsänderung oder Orientierung des jeweiligen Gliedes bestimmen, dass ausgehend von einem untersten Glied, das sich gegen einen festen Bezug im Raum bewegt, aus den Orientierungen oder Orientierungsänderungen eine relative Orientierung eines jeweiligen Gliedes zu seinem übergeordneten Glied bestimmt wird und in Kenntnis der Länge der Glieder die Position des jeweiligen Glieds bis hin zu der Position und/oder Orientierung des ersten Glieds berechnet wird.

2. Verfahren nach einem der vorhergehenden Ansprüche,
wobei eine von der Robotersteuerung (14) bestimmte Orientierung mehrerer oder aller Glieder mit einer durch die Inertialsensoren (18) bestimmten Orientierung verglichen wird.

3. Verfahren nach einem der vorhergehenden Ansprüche,
wobei das erste Glied einen Endeffektor (16) aufweist und/oder wobei an allen Gliedern jeweils ein Inertialsensor (18) mitbewegt wird.

4. Verfahren nach einem der vorhergehenden Ansprüche,
wobei mindestens einer der Inertialsensoren (18) einen Beschleunigungssensor und/oder einen Magnetfeldsensor aufweist und durch Sensorfusion eine verbesserte Orientierungsänderung oder Orientierung bestimmt.

5. Verfahren nach einem der vorhergehenden Ansprüche,
wobei die Robotersteuerung (14) die Vorwärtskinematik des Roboters (10) berechnet und eine damit bestimmt Pose ausgibt.

6. Verfahren nach einem der vorhergehenden Ansprüche,
wobei Orientierungen oder Orientierungsinformationen zumindest teilweise in Quaternionen verarbeitet und insbesondere für Vergleiche in Eulerwinkel umgerechnet werden.

7. Verfahren nach einem der vorhergehenden Ansprüche,
wobei der Inertialsensor (18) Kinematikinformationen in Echtzeit bereitstellt, insbesondere mit mindestens der Messrate, mit der die Robotersteuerung (14) eine Pose bestimmt.

8. Verfahren nach einem der vorhergehenden Ansprüche,
wobei in dem Bewegungsablauf des Roboters (10) mindestens ein besonderer Wegpunkt vorgesehen ist, und wobei die Validierung nur in einer Umgebung des besonderen Wegpunkts erfolgt und/oder die Validierung zusätzlich durch den besonderen Wegpunkt gestützt wird, wobei der besondere Wegpunkt insbesondere ein sicherer Nullpunkt des Roboters (10) oder ein Umschaltpunkt, ein Arbeitspunkt oder ein Prüfpunkt ist, wobei an einem Umschaltpunkt ein Arbeitsvorgang beginnt oder endet, an einem Arbeitspunkt der Roboter (10) mit einem Werkstück in Berührung kommt und an einem Prüfpunkt eine Funktionsprüfung eines Sicherheitssensors zum Absichern des Roboters (10) erfolgt.

9. Verfahren nach einem der vorhergehenden Ansprüche,
wobei der Roboter (10) zur Vermeidung von Kollisionen von einem mitbewegten Sicherheitssensor abgesichert wird und wobei der Sicherheitssensor insbesondere seine Absicherung an die validierte Pose anpasst und/oder einen besonderen Wegpunkt erkennt.

10. Verfahren nach einem der vorhergehenden Ansprüche,
wobei ein Inertialsensor (18) nachträglich an dem Roboter (10) angebracht und
die Validierung der Pose des Roboters (10) nachgerüstet wird.

11. Verfahren nach einem der vorhergehenden Ansprüche,
wobei die Kinematikinformationen mit einem Filter zum Unterdrücken von erwarteten Vibrationen der Roboterbewegung gefiltert werden, wobei das Filter insbesondere in einer Einlernphase unter Bewegen des Roboters (10) parametriert wird und/oder wobei ein Inertialsensor (18) ein Barometer aufweist, mit dem eine Höhenposition der Pose der Robotersteuerung (14) validiert wird.

12. Sichere Posenbestimmungsvorrichtung zum Validieren einer Pose mit einer Position und/oder einer Orientierung eines ersten Gliedes (16) eines mehrgliedrigen Roboters (10) mit jeweils einem Gelenk (12) zwischen den Gliedern, die eine Steuer- und Auswertungseinheit (20), eine Schnittstelle zu einer Robotersteuerung (14) des Roboters (10) und mindestens einen mit dem Roboter (10) mitbewegt montierten Inertialssensor (18) aufweist, insbesondere mit einem Drehratensensor,
**dadurch gekennzeichnet,**
**dass** sichere Posenbestimmungsvorrichtung mehrere mit jeweils einem Glied mitbewegte Inertialsensoren (18) aufweist, und dass die Steuer- und Auswertungseinheit (20) für ein Verfahren nach einem der vorhergehenden Ansprüche ausgebildet ist.

13. System mit einem Roboter (10) und einer sicheren Posenbestimmungsvorrichtung nach Anspruch 12, wobei das System insbesondere einen mitbewegten Sicherheitssensor zur Vermeidung von Kollisionen aufweist.
